# EUROPÄISCHE PATENTSCHRIFT

(11) **EP 0 825 334 B1**
(45) Veröffentlichungstag und Bekanntmachung des Hinweises auf die Patenterteilung: **21.11.2001**
(21) Anmeldenummer: 97110183.7
(22) Anmeldetag: 21.06.1997
(51) Int. Cl.: F01L 1/348, F01L 1/46, F16J 15/32

(54) **Vorrichtung zur Abdichtung eines feststehenden, zylindrischen Bauteils**
Static sealing arrangement for cylindrical housing
Dispositif d'étanchéité statique pour boîtier cylindrique

(30) Priorität: 20.08.1996 DE 19633418
(43) Veröffentlichungstag der Anmeldung: 25.02.1998
(73) Patentinhaber: Dr.Ing.h.c. F. Porsche Aktiengesellschaft, 70435 Stuttgart (DE)
(72) Erfinder: Rehr, Antonius, 71287 Weissach (DE)

(56) Entgegenhaltungen:
- EP-A- 0 340 821
- FR-A- 2 102 871
- US-A- 4 418 922
- US-A- 5 199 721

## Beschreibung

Die Erfindung betrifft eine Vorrichtung zur Abdichtung eines feststehenden, zylindrischen Bauteils nach der Gattung des Hauptanspruches.

In der EP 0 340 821 A2 ist eine Einrichtung zur Verstellung der relativen Phasenlage der Nockenwelle einer Brennkraftmaschine dargestellt, deren Steuerventil ein zylindrisches Gehäuse aufweist, das gegenüber einem am Zylinderkopf dieser Brennkraftmaschine angeordneten Gehäuse abgedichtet ist. Zur Abdichtung des zylindrischen Steuerventilgehäuses dient eine zylinderrohrförmige Dichtung, die mit ihrer Innenseite am Steuerventilgehäuse und mit ihrer Außenseite am aufnehmenden Gehäuse anliegt. Zur Fixierung des Steuerventils am aufnehmenden Gehäuse dient ein flanschartiger Deckel, der an diesem Gehäuse verschraubt ist. Eine derartige Aufnahme und Abdichtung eines zylindrischen Steuerventilgehäuses hat den Nachteil, daß der Ausgleich von Toleranzen nur in sehr geringem Maße möglich ist.

Aus der DE 41 04 219 ist weiterhin eine zylindrische Magnetventilbaueinheit bekannt, die ebenfalls Bestandteil einer Vorrichtung zur relativen Verdrehung einer Nockenwelle einer Brennkraftmaschine ist und ein Gehäuselement des Zylinderkopfes durchdringt. Zur Befestigung des zylindrischen Bauelementes dient ein dieses umfassender flanschartiger Deckel, der stirnseitig am Zylinderkopf verschraubt ist. Hinweise auf die Abdichtung zwischen Deckel und Zylinderkopf bzw. zwischen Deckel und dem zylindrischen Bauelement sind nicht gegeben.

Aus der US-PS 4,418,922 und der US-PS 5,199,721 sind mit Dichtlippen versehene Dichtungselemente bekannt, mit denen in einem Gehäuse angeordnete rotierende Bauteile, wie z. B. Getriebewellen oder Kurbelwellen nach außen hin abgedichtet sind.

Es ist darüber hinaus bekannt, die Abdichtung von zylindrischen Bauelementen, insbesondere Steuerventilelementen bzw. den dazugehörigen Magnetgehäusen durch O-Ringe vorzunehmen, die innenseitig am entsprechenden zylindrischen Bauelement und außenseitig an der aufnehmenden Bohrung anliegen. Es ist ebenfalls bekannt, diese als O-Ringe bezeichneten Dichtelemente stirnseitig anzuordnen.

Es ist demgegenüber Aufgabe der Erfindung, die Abdichtung eines feststehenden, zylindrischen Bauteils gegenüber einem davon durchdrungenen Gehäusebauteil dahingehend zu verbessern, daß ein Ausgleich größerer Toleranzen möglich ist. Dabei soll mit möglichst geringem Aufwand eine zuverlässige Abdichtung des Zwischenraumes zwischen dem feststehenden zylindrischen Bauelement und dem aufnehmenden Gehäusebauteil geschaffen werden. Diese Abdichtung soll dabei Lageabweichungen senkrecht zur Achsrichtung des zylindrischen Bauelementes überbrücken, die bis zu fünf Prozent des Bauteilradius betragen können. Dabei soll weiterhin eine einfache und sichere Montage des Bauelementes und der Vorrichtung zur Abdichtung sichergestellt werden. Letztlich soll diese Vorrichtung zur Abdichtung kostengünstig herzustellen und ebenso kostengünstig zu montieren sein.

Diese Aufgabe wird erfindungsgemäß mit den kennzeichnenden Merkmalen des Hauptanspruches gelöst. Durch die Ausbildung eines gegenüber herkömmlichen Verschraubungen relativ großen Spiels bei der Verschraubung des Deckels am Gehäusebauteil können relativ große Toleranzen der Einbaulage des zylindrischen Bauteils gegenüber dem aufnehmenden Bauteil in radialer Richtung ausgeglichen werden. Der Deckel wird beim Aufsetzen auf das Gehäusebauteil durch die führende Wirkung des zylindrischen Bauteils quasi selbsttätig positioniert. Eine zuverlässige Abdichtung wird dabei durch die Auftrennung der Dichtfunktionen in einen umlaufenden inneren Dichtabschnitt, der am zylindrischen Bauteil anliegt, und einen weiteren, stirnseitig am Gehäusebauteil anliegenden Dichtabschnitt sichergestellt. Eine derartige Vorrichtung zur Abdichtung eines feststehenden, zylindrischen Bauteils ist einfach herzustellen und besonders einfach zu montieren. Zur Montage braucht nur das mit dem Dichtelement versehene Deckelelement über das zylindrische Bauteil geführt werden, wodurch sich bereits eine die Lageabweichungen des zylindrischen Bauteils berücksichtigende Positionierung des Deckelelementes ergibt. Dieses kann aufgrund der mit relativ großem Spiel versehenen Verschraubungen ohne weiteres am durchdrungenen Gehäusebauteil befestigt werden, wobei gleichzeitig durch den stirnseitigen Dichtabschnitt die Abdichtung gegenüber diesem durchdrungenen Bauteil erfolgt. Dabei ist der Ausgleich selbst größerer Toleranzen ohne weiteres möglich und eine sichere Abdichtung gewährleistet. Ein Beschädigen der Dichtung ist nahezu ausgeschlossen.

Die zum Ausgleich der Toleranzen vorgesehene Ausbildung der Verschraubung des Deckelelementes mit relativ großem Spiel kann auf besonders einfache Weise dadurch erstellt werden, daß die zur Verschraubung des Deckelelementes erforderlichen Bohrungen in diesem Bauteil relativ groß gegenüber dem Durchmesser der dazu dienenden Schrauben ist. Dabei ist nur sicherzustellen, daß in allen radialen Endlagen, d.h. wenn die Schraube am Rand der Bohrung des Deckelelementes anliegt, eine sichere Anlage des Schraubenkopfes an der Stirnseite des Deckelelementes gewährleistet ist.

Die stirnseitige Abdichtung zwischen Deckelelement und durchdrungenem Gehäusebauteil kann auf besonders einfache und vorteilhafte Weise durch Ausbildung einer unteren ringförmigen Dichtlippe erfolgen, die das Deckelelement zum Gehäusebauteil hin überragt. Dabei kann auf die Ausbildung von Nuten oder Vorsprüngen am durchdrungenen Bauteil und/oder am Deckelelement verzichtet werden, so daß keine aufwendigen Formgebungs- oder Herstellungsmaßnahmen erforderlich sind. Durch diese stirnseitige Abdichtung des Deckelelementes und damit des Steuerventilgehäuses (zylindrisches Bauteil) ist eine einfache Anlage an der Oberseite des durchdrungenen Bauteils möglich, ohne daß besondere auf die Abdichtung abgestimmte Bearbeitungen oder Formgebungen erforderlich sind. Insbesondere wenn die gegeneinander abzudichtenden Bauelemente Bestandteil einer Brennkraftmaschine sind, treten im Betrieb der Brennkraftmaschine mehr oder weniger starke Vibrationen auf. Eine sichere Abdichtung des feststehenden, zylindrischen Bauteils gegenüber dem durchdrungenen Gehäusebauteil kann dazu auf besonders einfache Weise sichergestellt werden, wenn der umlaufende innere Dichtabschnitt zur Anlage am zylindrischen Bauteil mit einem umlaufenden Hinterschnitt versehen ist. Durch diesen Hinterschnitt können vibrationsbedingte Lageabweichungen der beiden gegeneinander abzudichtenden Bauelemente in radialer Richtung ohne weiteres ausgeglichen werden.

Die Vorrichtung zur Abdichtung des feststehenden, zylindrischen Bauteils kann auf besonders vorteilhafte Weise mit einem dritten umlaufenden Dichtabschnitt versehen werden, der am zylindrischen Bauteil anliegt und auf der dem Gehäusebauteil abgewandten Seite des ersten inneren Dichtabschnittes angeordnet ist. Dieser zusätzliche Dichtabschnitt kann dann die Funktion einer Staub- bzw. Schmutzabdichtung vornehmen. Zusätzlich wirkt dieser zusätzliche Dichtabschnitt in besonders vorteilhafter Weise als Führungs- und Positionierhilfe bei der Montage des Deckels. Dadurch kann ein Verkanten des Deckels und ein Abkippen des Haupt-Dichtabschnittes aufgrund der axial beabstandeten zweiten Führung verhindert werden.

Die Herstellung der Vorrichtung zur Abdichtung des feststehenden zylindrischen Bauteils ist besonders kostengünstig und einfach wenn das Deckelelement als Gußbauteil, insbesondere als Druckgußbauteil, ausgebildet ist. Eine aufwendige spanende Nachbearbeitung ist dabei nicht erforderlich. Es ist weiterhin besonders vorteilhaft, wenn das Dichtelement aus einem elastomeren Material gebildet ist, das an das Deckelelement angespritzt oder anvulkanisiert ist.

Weitere Vorteile und vorteilhafte Weiterbildungen der Erfindung ergeben sich aus den Unteransprüchen und der Beschreibung.

Ein Ausführungsbeispiel der Erfindung ist in der nachfolgenden Beschreibung und Zeichnung näher erläutert. Letzter zeigt in
- Fig. 1: die schematische, teilweise geschnittene Darstellung einer Einrichtung zur Verstellung der relativen Drehlage zweier gekoppelter Wellen mit einem zylindrischen, feststehenden Steuerventilgehäuse,
- Fig. 2: einen Schnitt durch die Vorrichtung zur Abdichtung des zylindrischen Bauteils und
- Fig. 3: eine Draufsicht auf das Deckelelement.

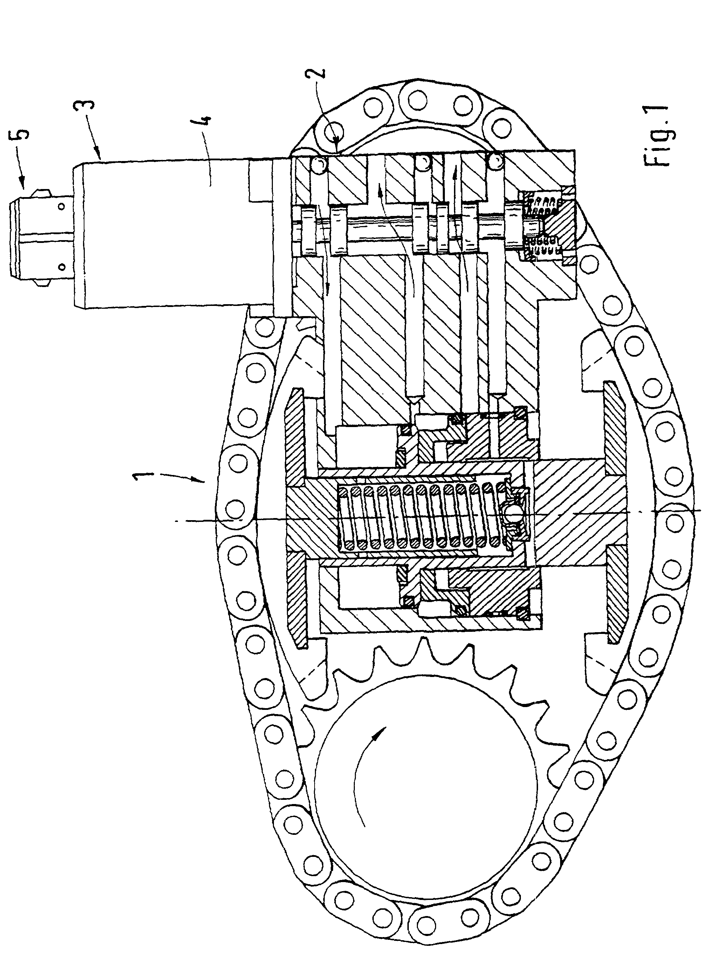

In Fig. 1 ist beispielhaft eine Vorrichtung zur Veränderung der relativen Drehlage zweier miteinander gekoppelter Wellen dargestellt, die im Zylinderkopf einer nicht näher dargestellten Brennkraftmaschine angeordnet ist. Diese Einrichtung 1 hat ein Steuerventil 2, dessen elektromagnetisches Stellelement 3 in einem zylindrischen Gehäuse 4 untergebracht ist. Dieses ist fest an der Vorrichtung 1 angebaut, die wiederum fest im nicht dargestellten Zylinderkopf der Brennkraftmaschine angeordnet ist. Eine derartige Vorrichtung ist beispielsweise in der DE 44 29 071 A1 beschrieben.

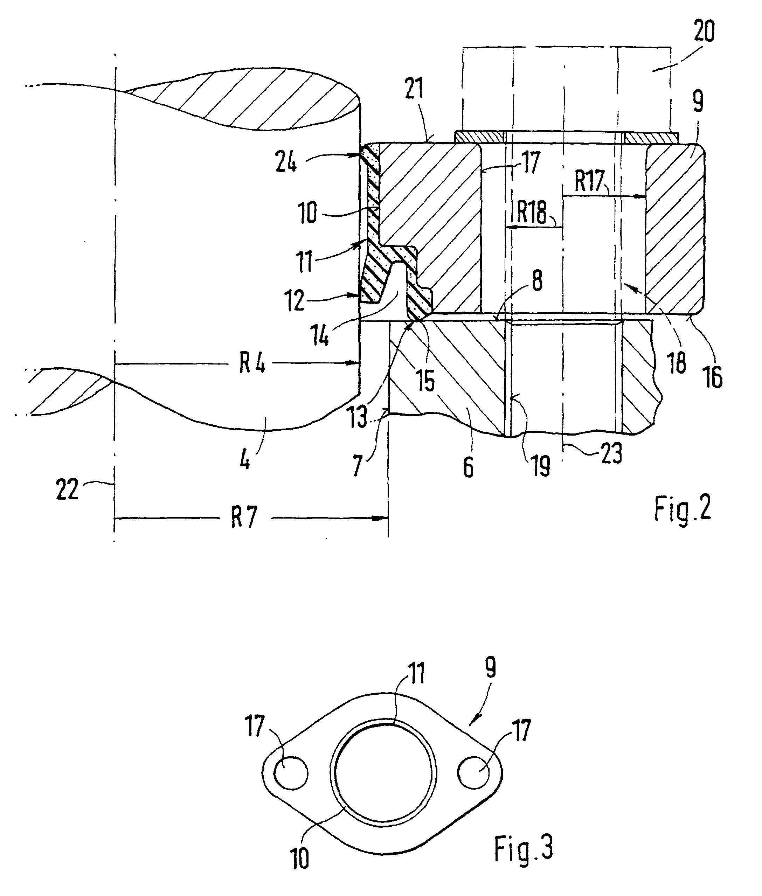

Die elektrischen Anschlüsse 5 des Stellelementes 3 sind dabei von außen zugänglich. Dazu durchdringt das zylindrische Gehäuse 4 ein Gehäusebauteil 6 des Zylinderkopfes, beispielsweise den Zylinderkopfdeckel (Fig. 2). Das Gehäusebauteil 6 hat dazu eine Bohrung 7, deren Radius R7 größer ist als der Radius R4 des Gehäuses 4.

An der Stirnseite 8 des Gehäusebauteils 6 ist ein Deckelelement 9 verschraubt, das mit einer abgestuften Bohrung 10 das zylindrische Gehäuse 4 umgreift. Zwischen der Bohrung 10 und dem zylindrischen Gehäuse 4 ist eine zylinderringförmige, elastische Dichtung 11 angeordnet, die mit einem ersten Dichtabschnitt 12 am zylindrischen Gehäuse 4 und mit einem zweiten Dichtabschnitt 13 an der Stirnseite 8 des Gehäusebauteils 6 anliegt.

Die Dichtung 11 liegt in diesem Ausführungsbeispiel über ihre gesamte axiale Länge an der Wand der gestuften Bohrung 10 an und kann als separates Bauelement ausgebildet oder an das Deckelelement 9 angespritzt oder anvulkanisiert sein. Der Dichtabschnitt 12 ist als radial nach innen gezogene, umlaufende Dichtlippe ausgeführt, die mit einem umlaufenden Hinterschnitt 14 versehen ist. Dieser umlaufende Hinterschnitt geht von der dem Gehäusebauteil 6 zugewandten Seite des Dichtelementes aus. Der zweite umlaufende Dichtabschnitt 13 ist konzentrisch zum ersten Dichtabschnitt 12 und dem Hinterschnitt 14 angeordnet und hat eine umlaufende, ringförmige Dichtkante 15, die die dem Gehäusebauteil 6 zugewandte Stirnseite 16 des Deckelelementes 9 in axialer Richtung überragt. Mit dieser umlaufenden Dichtkante 15 liegt der zweite Dichtabschnitt 13 der Dichtung 11 an der Stirnseite 8 des Gehäusebauteils 6 an.

Das Deckelelement 9 mit der Dichtung 11 ist - wie zuvor angeführt - mit dem Gehäusebauteil 6 verschraubt. Das Deckelelement 9 hat dazu zwei Bohrungen 17, die beiderseits der Bohrung 10 angeordnet sind. Diese Bohrungen 17 werden von Schrauben 18 durchdrungen, die in Gewindesacklochbohrungen des Gehäusebauteils 6 verschraubt sind. Die Schraubenköpfe 20 der Schrauben 18 liegen auf der dem Gehäusebauteil 6 abgewandten Stirnseite 21 des Deckelelementes 9 an. Der Radius R18 der Schrauben ist dabei deutlich kleiner als der Radius R17 der Bohrung 17. Die Radien R18 und R17 der Schraube 18 bzw. der Bohrung 17 sind so aufeinander abgestimmt, daß alle toleranzbedingten Lageabweichungen des zylindrischen Bauteils 4 bzw. der Zylinderachse 22 in radialer Richtung relativ zum durchdrungenen Bauteil 6 ausgeglichen werden können. Dazu ist die Differenz der Verschraubungsradien R17 und R18 größer oder gleich der zulässigen radialen Lageabweichung der Zylinderachse 22 von einer vorgegebenen Mittellage. In diesem Ausführungsbeispiel ist die Differenz der Verschraubungsradien R17 und R18 genauso groß wie die Differenz zwischen Bohrungsradius R7 und Zylinderradius R4. Die Abmessungen des Schraubenkopfes 20 sind so auf die Abmessungen der Bohrung 17 im Deckelelement 9 abgestimmt, daß eine sichere Anlage an der Stirnseite 21 auch dann noch gewährleistet ist, wenn die Schraube 18 an der Wand der Bohrung 17 anliegt.

Die Dichtung 11 hat darüber hinaus noch einen dritten Dichtabschnitt 24, der im Bereich der Stirnseite 21 des Deckelelementes 9 angeordnet ist. Dieser dritte Dichtabschnitt 24 hat ebenfalls eine umlaufende Dichtlippe, die mit ihrer radialen Innenseite am zylindrischen Bauteil anliegt. Der dritte Dichtabschnitt 24 dient als Staub- bzw. Schmutzdichtung.

## Patentansprüche

1. Vorrichtung zur Abdichtung eines feststehenden Steuerventilgehäuses (4), gegenüber einem davon durchdrungenen Zylinderkopfgehäuse (6) einer Brennkraftmaschine, mit einem Deckelelement (9), das mit einer Flachseite (16) am durchdrungenen Zylinderkopfgehäuse (6) anliegt und an diesem verschraubt ist und mit einer zylindrischen Öffnung (10) das Steuerventilgehäuse (4) umgreift, **dadurch gekennzeichnet, daß** das Deckelelement eine zylinderringförmige, elastische Dichtung (11) aufweist, die mit einem ersten, inneren Dichtabschnitt (12) am Steuerventilgehäuse (4) und mit einem weiteren, stirnseitigen Dichtabschnitt (13) am Zylinderkopfgehäuse (6) anliegt, und daß die Verschraubung (17, 18) des Deckelelementes (9) mit Spiel ausgeführt ist.

2. Vorrichtung zur Abdichtung nach Anspruch 1, **dadurch gekennzeichnet, daß** der Durchmesser der zur Verschraubung des Deckelelementes (9) dienenden Schrauben (18) kleiner ist als der Durchmesser der von diesen durchdrungenen Bohrungen (17) im Deckelement.

3. Vorrichtung nach Anspruch 1 oder 2, **dadurch gekennzeichnet, daß** der weitere Dichtabschnitt (13) als untere ringförmige Dichtlippe (15) ausgebildet ist, die das Deckelement (9) zum Zylinderkopfgehäuse (6) hin überragt.

4. Vorrichtung nach einem der vorangehenden Ansprüche, **dadurch gekennzeichnet, daß** der erste Dichtabschnitt (12) eine radial nach innen weisende, ringförmige Dichtlippe ist, die einen umlaufenden Hinterschnitt (14) aufweist.

5. Vorrichtung nach einem der vorangehenden Ansprüche, **dadurch gekennzeichnet**, daB die Dichtung (11) einen dritten umlaufenden Dichtabschnitt (24) aufweist, der am Steuerventilgehäuse (4) anliegt und auf der dem Zylinderkopfgehäuse (6) abgewandten Seite der Dichtung angeordnet ist.

6. Vorrichtung nach einem der vorangehenden Ansprüche, **dadurch gekennzeichnet, daß** die Dichtung (11) aus einem elastomeren Material besteht, das an das Deckelelement (9) angespritzt ist.

7. Vorrichtung nach einem der vorangehenden Ansprüche, **dadurch gekennzeichnet, daß** die Dichtung (11) aus einem elastomeren Material besteht, das an das Deckelelement (9) anvulkanisiert ist.

8. Vorrichtung nach einem der vorangehenden Ansprüche, **dadurch gekennzeichnet, daß** das Deckelement (11) ein Gußbauteil, insbesondere ein Druckgußbauteil ist.

## Claims

1. A device for sealing a fixed control-valve housing (4) off from a cylinder-head housing (6) of an internal-combustion engine through which it passes, with a cover member (9) resting with a flat side (16) against the traversed cylinder-head housing (6) and bolted thereto and surrounding the control-valve housing (4) with a cylindrical opening (10), **characterized in that** the cover member has a cylindrical-annular resilient seal (11) resting with a first inner sealing portion (12) against the control-valve housing (4) and with a further sealing portion (13) on the end face against the cylinder-head housing (6), and the bolt fastening (17, 18) of the cover member (9) is designed to have clearance.

2. A device for sealing according to Claim 1, **characterized in that** the diameter of the bolts (18) used for the bolt fastening of the cover member (9) is smaller that the diameter of the bores (17) in the cover member through which the bolts (18) pass.

3. A device according to Claim 1 or 2, **characterized in that** the further sealing portion (13) is constructed in the form of a lower annular sealing lip (15) which projects beyond the cover member (9) towards the cylinder-head housing (6).

4. A device according to one of the preceding Claims, **characterized in that** the first sealing portion (12) is an annular sealing lip directed radially towards the inside and having a continuous undercutting (14).

5. A device according to one of the preceding Claims, **characterized in that** the seal (11) has a third continuous sealing portion (24) resting against the control-valve housing (4) and arranged on the side of the seal remote from the cylinder-head housing (6).

6. A device according to one of the preceding Claims, **characterized in that** the seal (11) consists of an elastomer material injection-moulded onto the cover member (9).

7. A device according to one of the preceding Claims, **characterized in that** the seal (11) consists of an elastomer material vulcanized onto the cover member (9).

8. A device according to one of the preceding Claims, **characterized in that** the cover member (9) is a cast component, in particular a die-cast component.

## Revendications

1. Dispositif destiné à rendre étanche un boîtier de soupape de commande (4) fixe, par rapport à un boîtier de culasse (6), traversé par celui-ci, d'un moteur à combustion interne, comportant un élément de couvercle (9), qui s'applique, par un côté plat (16), contre le boîtier de culasse (6) traversé, et qui est vissé à ce dernier, et comportant une ouverture cylindrique (10) qui entoure le boîtier de soupape de commande (4), **caractérisé en ce que** l'élément de couvercle présente une garniture d'étanchéité (11) élastique, en forme de bague de cylindre, qui s'applique, par un premier segment d'étanchéité intérieur (12), contre le boîtier de soupape de commande (4) et par un autre segment d'étanchéité (13) frontal, contre le boîtier de culasse (6) et **en ce que** le vissage (17, 18) de l'élément de couvercle (9) est réalisé avec jeu.

2. Dispositif d'étanchéité selon la revendication 1, **caractérisé en ce que** le diamètre des vis (18), qui servent au vissage de l'élément de couvercle (9), est inférieur au diamètre des perçages (17) de l'élément de couvercle, traversés par celles-ci.

3. Dispositif selon la revendication 1 ou 2, **caractérisé en ce que** l'autre segment d'étanchéité (13) est réalisé en tant que lèvre d'étanchéité inférieur (15) de forme annulaire, qui dépasse de l'élément de couvercle (9) vers le boîtier de culasse (6).

4. Dispositif selon l'une des revendications précédentes, **caractérisé en ce que** le premier segment d'étanchéité (12) est une lèvre d'étanchéité de forme annulaire, dirigée radialement vers l'intérieur, qui présente un détalonnage (14) périphérique.

5. Dispositif selon l'une des revendications précédentes, **caractérisé en ce que** la garniture d'étanchéité (11) comporte un troisième segment d'étanchéité (24) périphérique qui s'applique contre le boîtier de soupape de commande (4) et qui est disposé sur le côté de la garniture d'étanchéité, tourné à l'opposé du boîtier de culasse (6).

6. Dispositif selon l'une des revendications précédentes, **caractérisé en ce que** la garniture d'étanchéité (11) est constituée d'une matière élastomère qui est moulée par injection sur l'élément de couvercle (9).

7. Dispositif selon l'une des revendications précédentes, **caractérisé en ce que** la garniture d'étanchéité (11) est constituée d'une matière élastomère qui est vulcanisée sur l'élément de couvercle (9).

8. Dispositif selon l'une des revendications précédentes, **caractérisé en ce que** l'élément de couvercle (11) est un composant en fonte, en particulier un composant coulé sous pression.
